# EUROPEAN PATENT APPLICATION

(11) **EP 4 711 691 A1**
(43) Date of publication of application: **18.03.2026**
(21) Application number: 24830612.8
(22) Date of filing: 20.06.2024
(51) Int. Cl.: F25B 30/06, F25B 41/20, F25B 41/42, F25B 39/00, G01K 1/14, G01K 1/00, G01K 13/02, G01K 7/02

(54) **HEAT EXCHANGE DEVICE, HYDRAULIC MODULE AND HEAT PUMP SYSTEM**

(30) Priority: 30.06.2023 CN 202321714718 U
(71) Applicant: GD Midea Heating & Ventilating Equipment Co., Ltd., Foshan, Guangdong 528311 (CN); Hefei Midea Heating & Ventilating Equipment Co., Ltd., Hefei, Anhui 230088 (CN)
(72) Inventor: ZHAN, Linmin, Foshan, Guangdong 528311 (CN); LI, Yang, Foshan, Guangdong 528311 (CN); LI, Hongwei, Foshan, Guangdong 528311 (CN); YANG, Yongliang, Foshan, Guangdong 528311 (CN)
(74) Representative: Ran, Handong
(86) International application number: PCT/CN2024/100440
(87) International publication number: WO 2025/001966

(57) **Abstract**

A heat exchange device (10), a hydraulic module, and a heat pump system. The heat exchange device (10) comprises a heat exchange body (100) and a temperature testing assembly (200). The temperature testing assembly (200) comprises a temperature probe (210), a heat-conductive elastic member (230) and a position-limiting member (220); the temperature probe (210) comprises a temperature measurement body (211) and a positioning part (212) arranged on the temperature measurement body (211); the temperature measurement body (211) passes through a temperature measurement hole (121) of the heat exchange body (100) and extends to a water channel; the heat-conductive elastic member (230) is arranged between the positioning part (212) and a positioning surface (1211) of the heat exchange body (100); and the position-limiting member (220) is fixed to the heat exchange body (100), and abuts against the positioning part (212) in the axial direction of the temperature measurement hole (121).

## Description

### TECHNICAL FIELD

The present application relates to the field of heat exchange device technology, and in particular to a heat exchange device, a hydraulic module, and a heat pump system.

### BACKGROUND

A heat exchange device of a hydraulic module is provided with a temperature sensor, which is inserted into a water conveyance flow passage of the heat exchange device to detect the temperature of a heat exchange medium, to timely adjust the temperature of the heat exchange medium outputted from the heat exchange device. A structure for fixing the temperature sensor will affect the installation stability and the depth of the temperature sensor inserted into the water conveyance flow passage, which will affect the stability of the temperature sensor in detecting the temperature of the heat exchange medium.

### SUMMARY

Embodiments of the present application provide a heat exchange device, a hydraulic module, and a heat pump system, which can solve a problem that the heat exchange device has a complex structure for fixing a temperature sensor.

In a first aspect, embodiments of the present application provide a heat exchange device for a hydraulic module, and the heat exchange device includes:
a heat exchange body having a water conveyance flow passage and a temperature measurement hole communicating with the water conveyance flow passage, wherein a wall surface of the heat exchange body defining the temperature measurement hole comprises a positioning surface, and an angle is formed between the positioning surface and an axial direction of the temperature measurement hole; and
a temperature detection assembly comprising a temperature probe, a heat-conductive elastic member and a retainer, wherein the temperature probe includes a temperature measurement body and a positioning portion arranged on the temperature measurement body, the temperature measurement body passes through the temperature measurement hole and is inserted into the water conveyance flow passage, the heat-conductive elastic member is arranged between the positioning surface and the positioning portion; and the retainer is fixed to the heat exchange body, and abuts against the positioning portion.

In some exemplary embodiments, an outer surface of the heat exchange body includes a detector mounting surface, and the temperature measurement hole extends from the detector mounting surface.

The positioning portion is arranged in the temperature measurement hole, and a surface of the positioning portion away from the positioning surface is flush with the detector mounting surface, and the retainer abuts against the detector mounting surface.

In some exemplary embodiments, the heat exchange body includes:
a heat exchange box having the water conveyance flow passage and an insertion port communicating with the water conveyance flow passage; and
a probe positioning portion having the temperature measurement hole, wherein the probe positioning portion is arranged at the insertion port and protrudes from an outer surface of the heat exchange box; and a surface of the probe positioning portion away from the insertion port forms the detector mounting surface.

In some exemplary embodiments, an outer peripheral wall surface of the retainer is provided with a retainer opening penetrating through the retainer along the axial direction of the temperature measurement hole; and the temperature probe passes through the retainer opening and comes into contact with a wall surface of the retainer opening.

In some exemplary embodiments, the retainer includes:
a retainer portion abutting against the positioning portion; and
a retainer mounting portion arranged on one side of the retainer portion and fixed to the heat exchange body.

In some exemplary embodiments, the retainer mounting portion is provided with a temperature detection threaded hole, which is parallel to the axial direction of the temperature measurement hole.

The temperature detection assembly further comprises a temperature detection screw, which is arranged in the temperature detection threaded hole to fix the retainer to the heat exchange body.

In some exemplary embodiments, the water conveyance flow passage includes a water inlet section and a water outlet section, the heat exchange body has two temperature measurement holes corresponding one-to-one to the water inlet section and the water outlet section; and the heat exchange device has two temperature detection assemblies corresponding one-to-one to the two temperature measurement holes.

In some exemplary embodiments, the heat exchange device includes a water inlet port communicating with the water inlet section and a water outlet port communicating with the water outlet section; the water inlet port and the water outlet port protrude at a same side of the heat exchange body, and each of the temperature measurement holes is provided at a side away from the water inlet port and the water outlet port.

In a second aspect, the embodiments of the present application provide a hydraulic module including a casing and the heat exchange device as described above, and the heat exchange device is arranged in the accommodating cavity.

In a third aspect, the embodiments of the present application provide a heat pump system, which includes the hydraulic module as described above.

Based on the heat exchange device, the hydraulic module and the heat pump system of the embodiments of the present application, the retainer acts on the surface of the positioning portion away from the positioning surface, and the heat-conductive elastic member is positioned on a side of the positioning portion away from the retainer and abuts against the positioning surface. When the retainer is fixed to the heat exchange body, the temperature probe can be installed in place in one step, and a depth of the temperature measurement body of the temperature probe inserted into the water conveyance flow passage can be controlled, to improve the installation stability of the temperature measurement body, thereby improving the accuracy of the temperature measurement body in detecting temperature of a fluid in the water conveyance flow passage.

### BRIEF DESCRIPTION OF THE DRAWINGS

To describe the technical solutions of the embodiments of the present application or those of the prior art more clearly, the accompanying drawings required for describing the embodiments or the prior art will be briefly introduced below. Apparently, the accompanying drawings in the following description are merely some embodiments of the present application. To those of ordinary skills in the art, other accompanying drawings can also be derived from these accompanying drawings without creative efforts.
FIG. 1 is a schematic cross-sectional view of a temperature sensor fixed by a nut in the related art;
FIG. 2 is a schematic structural perspective view of a heat exchange device according to an embodiment of the present application;
FIG. 3 is a schematic structural exploded view of a temperature detection assembly according to an embodiment of the present application; and
FIG. 4 is a schematic cross-sectional view of a heat exchange device according to an embodiment of the present application.

Reference numerals in the accompanying drawings:
heat exchange device 10;
heat exchange body 100; water inlet port 101; water outlet port 102;
heat exchange box 110; insertion port 111; water inlet section 1121; water outlet section 1122;
probe positioning portion 120; temperature measurement hole 121; positioning surface 1211; first flow passage section 1212; second flow passage section 1213; detector mounting surface 122;
temperature detection assembly 200;
temperature probe 210; temperature measurement body 211; positioning portion 212;
retainer 220; retainer opening 2201; retainer portion 221; retainer mounting portion 222; temperature detection threaded hole 2202;
heat-conductive elastic member 230; and temperature detection screw 240.

### DETAILED DESCRIPTION

Detailed description of the present application will further be made with reference to the accompanying drawings and embodiments to make the objectives, technical solutions and advantages of the present application more apparent. It should be understood that the specific embodiments described herein are merely used to explain the present application, and are not intended to limit the present application.

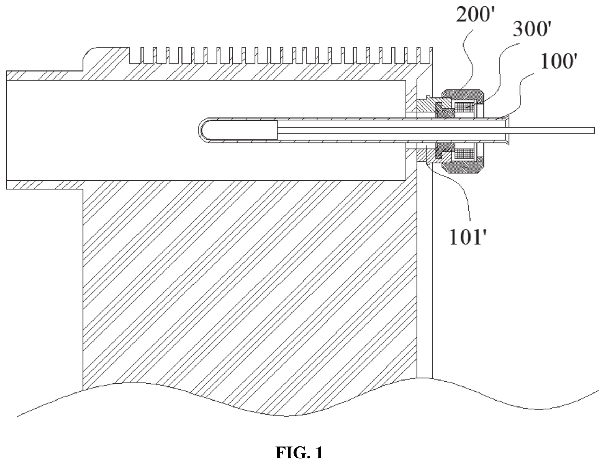

It is found that it is difficult to control the depth of a temperature sensor 100' inserted into a water conveyance flow passage in a structure for installing the temperature sensor 100'. For example, as shown in FIG. 1, the temperature sensor 100' is inserted into a temperature measurement hole 101' of a heat exchanger, and the temperature sensor 100' is inserted into the water conveyance flow passage. Next, a nut 200' is sleeved on an outer periphery of the temperature sensor 100'. The nut 200' is threadedly locked and fixed to a heat exchanger body. It is required to fill an inner side of the nut 200' with heat-conductive silicone 300', wherein the heat-conductive silicone 300' abuts against the temperature sensor 100' to fix the position of the temperature sensor 100'. This installation structure makes it difficult to accurately control the depth of the temperature sensor 100' inserted into the water conveyance flow passage, and it is also difficult to maintain the installation stability of the temperature sensor 100'. On this basis, embodiments of the present application provide a heat exchange device and a heat pump system.

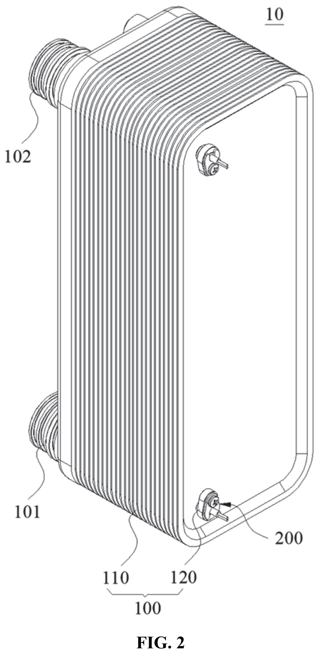

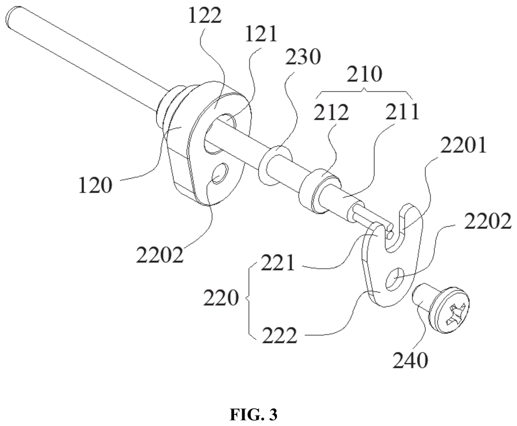

FIG. 2 shows a schematic structural diagram of a heat exchange device 10 provided in an embodiment of the present application. As shown in FIG. 3, the heat exchange device 10 includes a plate heat exchanger, a double-pipe heat exchanger, etc. The heat exchange device 10 is used for a hydraulic module. For example, the heat exchange device 10 is installed in an accommodating cavity of a casing of the hydraulic module.

The heat exchange device 10 includes a heat exchange body 100 and a temperature detection assembly 200. The heat exchange body 100 internally has a water conveyance flow passage and a refrigerant flow passage. Fluids having different temperatures flow inside the water conveyance flow passage and the refrigerant flow passage, respectively. The fluid in the water conveyance flow passage exchanges heat with the fluid in the refrigerant flow passage to regulate the temperature of the fluid in the water conveyance flow passage. The temperature detection assembly 200 is configured to obtain the temperature of the fluid in the water conveyance flow passage, to regulate the temperature of the fluid in the refrigerant flow passage according to the temperature of the fluid in the water conveyance flow passage, thereby controlling the temperature of the fluid outputted from the water conveyance flow passage to be within a preset temperature range.

The heat exchange body 100 has a temperature measurement hole 121 communicating with the water conveyance flow passage, wherein the water conveyance flow passage in the heat exchange body 100 is bent in multiple sections, such that the heat exchange body 100 has a longer water conveyance flow passage in a limited space, to make it convenient to control the temperature of the fluid in the water conveyance flow passage. The temperature measurement hole 121 may communicate with and be arranged coaxially with a part of a straight flow section of the water conveyance flow passage, such that the temperature detection assembly 200 passes through the temperature measurement hole 121 and is inserted into the water conveyance flow passage.

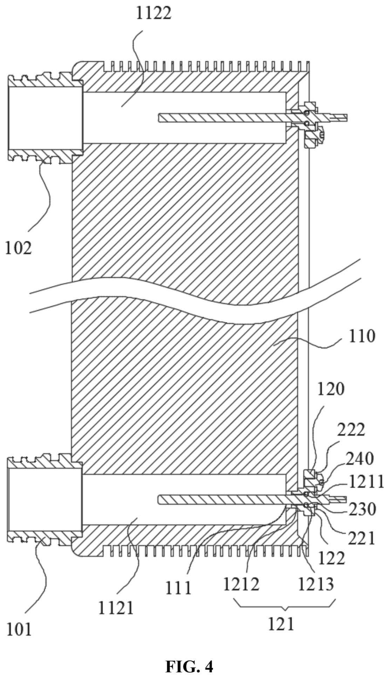

As shown in FIG. 4, a wall surface of the heat exchange body 100 defining the temperature measurement hole 121 comprises a positioning surface 1211, and an angle is formed between the positioning surface 1211 and an axial direction of the temperature measurement hole 121. Specifically, the temperature measurement hole 121 includes a first flow passage section 1212 communicating with the water conveyance flow passage and a second flow passage section 1213 communicating with external space, and the positioning surface 1211 is connected between the wall surface of the heat exchange body 100 defining the first flow passage section 1212 and the wall surface of the heat exchange body 100 defining the second flow passage section 1213. For example, the flow area of the first flow passage section 1212 is smaller than the area of the second flow passage section 1213, and the positioning surface 1211 is perpendicular to the axial direction of the temperature measurement hole 121, or in a direction from the first flow passage section 1212 to the second flow passage section 1213, the area from the positioning surface 1211 to a center axis of the temperature measurement hole 121 gradually increases.

The temperature detection assembly 200 includes a temperature probe 210 and a retainer 220. The temperature probe 210 passes through the temperature measurement hole 121 and is inserted into the water conveyance flow passage, to detect the temperature of the fluid in the water conveyance flow passage. The retainer 220 is installed on the heat exchange body 100 and is configured to limit the position of the temperature probe 210. Specifically, the temperature probe 210 includes a temperature measurement body 211 and a positioning portion 212 arranged on the temperature measurement body 211. For example, the positioning portion 212 is sleeved on an outer periphery of the temperature probe 210. The temperature measurement body 211 passes through the temperature measurement hole 121 and is inserted into the water conveyance flow passage. For example, the temperature measurement body 211 is rod-shaped, which enables the temperature measurement body 211 to be inserted into the water conveyance flow passage to detect the temperature of the fluid in the water conveyance flow passage.

When the temperature measurement body 211 is inserted into the water conveyance flow passage, the positioning portion 212 is positioned in the temperature measurement hole 121, and the positioning portion 212 abuts against the positioning surface 1211. The retainer 220 is fixed to the heat exchange body 100 and abuts against the positioning portion 212. For example, the retainer 220 abuts against the positioning portion 212 in the axial direction of the temperature measurement hole 121, and the temperature probe 210 is fixed to the heat exchange body 100 to prevent the temperature probe 210 from moving out of the temperature measurement hole 121.

When the retainer 220 is fixed to the heat exchange body 100, the retainer 220 acts on a surface of the positioning portion 212 away from the positioning surface 1211. The retainer 220 directly acts on the positioning portion 212 and can push the positioning portion toward a side where the positioning surface 1211 is positioned until the positioning portion 212 abuts against the positioning surface 1211. The positioning portion 212 may directly abut against the positioning surface 1211, or may abut against the positioning surface 1211 through another structural member. For example, the temperature detection assembly 200 also includes a heat-conductive elastic member 230, which is arranged between the positioning surface 1211 and the positioning portion 212, and the positioning portion 212 abuts against the positioning surface 1211 through the heat-conductive elastic member 230. The present application can realize the installation of the temperature probe 210 in one step, and control the depth of the temperature measurement body 211 of the temperature probe 210 inserted into the water conveyance flow passage, to improve the installation stability of the temperature measurement body 211, thereby improving the accuracy of the temperature measurement body 211 in detecting the temperature of the fluid in the water conveyance flow passage.

Optionally, the heat-conductive elastic member 230 is sleeved on the outer periphery of the temperature measurement body 211, and the heat-conductive elastic member 230 is deformable in the axial direction of the temperature measurement hole 121. For example, the heat-conductive elastic member 230 is a heat-conductive silicone elastic member or a heat-conductive rubber elastic member.

An outer surface of the heat exchange body 100 includes a detector mounting surface 122, and the temperature measurement hole 121 extends from the detector mounting surface 122. When the heat exchange device 10 is installed in the casing of the hydraulic module, the detector mounting surface 122 may be a surface of the heat exchange body 100 arranged along a direction of gravity. The orientation of the detector mounting surface 122 is not limited in the present application, and can be specifically selected according to actual needs.

The positioning portion 212 is arranged in the temperature measurement hole 121, and the surface of the positioning portion 212 away from the positioning surface 1211 is flush with the detector mounting surface 122, and the retainer 220 abuts against the detector mounting surface 122, to make it easier to design the structure of the retainer 220 such that the retainer 220 can abut against the positioning portion 212 and the detector mounting surface 122.

The length of the temperature measurement hole 121 is limited by the wall thickness of part of a wall surface of the heat exchange body 100. It is to be understood that the longer the temperature measurement hole 121 is, the more sufficient the wall surface of the heat exchange body 100 defining the temperature measurement hole 121 can come into contact with the positioning portion 212, thereby improving the installation stability of the temperature probe 210 arranged in the temperature measurement hole 121. Optionally, the heat exchange body 100 includes a heat exchange box 110 and a probe positioning portion 120, wherein the heat exchange box 110 has a water conveyance flow passage and a refrigerant flow passage, and the probe positioning portion 120 has the temperature measurement hole 121. The heat exchange box 110 also has an insertion port 111 communicating with the water conveyance flow passage. The probe positioning portion 120 is arranged at the insertion port 111 and protrudes from the outer surface of the heat exchange box 110. A surface of the probe positioning portion 120 away from the insertion port 111 forms the detector mounting surface 122. The depth of the temperature measurement hole 121 may be designed by dimensioning the probe positioning portion 120, such that when the positioning portion 212 is positioned in the temperature measurement hole 121, the area of contact between the probe positioning portion 120 and the positioning portion 212 is appropriate, thereby improving the installation stability of the temperature probe 210 installed on the heat exchange body 100.

Optionally, an outer peripheral wall surface of the positioning portion 212 includes at least two parts designed at an angle, and the wall surface of the heat exchange body 100 defining the temperature measurement hole 121 fits to the outer peripheral wall surface of the positioning portion 212, to prevent the temperature probe 210 from rotating around the temperature measurement hole 121 along a circumferential direction.

The retainer 220 is fixed to the probe positioning portion 120, wherein the probe positioning portion 120 protrudes from the outer surface of the heat exchange box 110, which is also convenient to fix the retainer 220 to the probe positioning portion 120, making it convenient for assembly.

As shown in FIG. 3, the outer peripheral wall surface of the retainer 220 is provided with a retainer opening 2201 penetrating through the retainer 220 along the axial direction of the temperature measurement hole 121. During the assembly, the retainer 220 may be placed on one side of the temperature measurement hole 121, the retainer opening 2201 faces towards the temperature probe 210, and the retainer 220 may be moved in a direction perpendicular to the axial direction of the temperature measurement hole 121 until the retainer 220 comes into contact with the surface of the positioning portion 212 and the detector mounting surface 122, respectively. The assembly can be completed by placing the temperature measurement body 211 into the retainer opening 2201 and fixing the retainer 220 to the positioning portion 212, so that the temperature probe 210 is fixed, and the temperature probe 210 is inserted into the water conveyance flow passage at a suitable position.

The temperature probe 210 passes through the retainer opening 2201 and comes into contact with the wall surface of the retainer 220 defining the retainer opening 2201. For example, the temperature probe 210 fits to or abuts against the wall surface of the retainer 220 defining the retainer opening 2201, to further improve the installation stability of the temperature probe 210.

Optionally, an outer contour of part of the temperature probe 210 placed in the retainer opening 2201 is circular; or the outer surface of the part of the temperature probe 210 placed in the retainer opening 2201 includes at least two parts arranged at an angle, to prevent the temperature probe 210 from rotating around the temperature measurement hole 121 along the circumferential direction.

The retainer 220 includes a retainer portion 221 and a retainer mounting portion 222. The retainer portion 221 abuts against the positioning portion 212. The retainer mounting portion 222 is arranged on one side of the retainer portion 221 and is fixed to the heat exchange body 100. For example, the retainer portion 221 and the retainer mounting portion 222 are integrally arranged, and the retainer 220 is plate-shaped. The retainer portion 221 has a retainer opening 2201, or the retainer portion 221 and the positioning portion 212 jointly define the retainer opening 2201.

The retainer mounting portion 222 is provided with a temperature detection threaded hole 2202. The temperature detection assembly 200 also includes a temperature detection screw 240. The temperature detection screw 240 is arranged in the temperature detection threaded hole 2202 to fix the retainer 220 to the heat exchange body 100, to facilitate the disassembly and assembly of the retainer 220.

The temperature detection threaded hole 2202 is parallel to the axial direction of the temperature measurement hole 121, which facilitates the assembly and prevents part of the temperature probe 210 protruding out of the temperature measurement hole 121 from hindering the installation of the retainer 220. Optionally, the detector mounting surface 122 of the heat exchange body 100 is provided with the temperature detection threaded hole 2202 to make the installed structure compact.

The water conveyance flow passage includes a water inlet section 1121 and a water outlet section 1122. For example, flow directions of the water inlet section 1121 and the water outlet section 1122 are parallel or opposite to each other. The heat exchange body 100 has two temperature measurement holes 121 corresponding one-to-one to the water inlet section 1121 and the water outlet section 1122. The axial direction of each temperature measurement hole 121 is parallel to or at an angle to the flow direction of the corresponding water inlet section 1121 or water outlet section 1122.

The heat exchange device 10 includes two temperature detection assemblies 200, wherein one of the two temperature detection assemblies 200 is arranged corresponding to one of the two temperature detection holes 121, and the other one of the two temperature detection assemblies 200 is arranged corresponding to the other one of the two temperature detection holes 121. For example, the two temperature detection assemblies 200 are arranged opposite to each other. Specifically, the retainer openings 2201 of the retainers 220 of the two temperature detection assemblies 200 are provided opposite to each other. Alternatively, the two temperature detection assemblies 200 are arranged in parallel. Specifically, the retainer openings 2201 of the retainers 220 of the two temperature detection assemblies 200 are provided toward the same side.

The two temperature detection assemblies 200 correspondingly detect the temperature of the fluid at the water inlet section 1121 and the water outlet section 1122, to obtain the temperature condition of the fluid flowing in or out of the water conveyance flow passage. Optionally, the heat exchange device 10 includes a water inlet port 101 communicating with the water inlet section 1121 and a water outlet port 102 communicating with the water outlet section 1122. The water inlet port 101 and the water outlet port 102 protrude at the same side of the heat exchange body 100, and each temperature measurement hole 121 is provided at a side away from the water inlet port 101 and the water outlet port 102. In this way, the temperature condition of the fluid flowing in or out of the water conveyance flow passage can be obtained. Meanwhile, this facilitates the installation of the temperature detection assembly 200, and can prevent the existence of the water inlet port 101 and the water outlet port 102 from hindering the installation of the temperature detection assembly 200.

The embodiments of the present application also provide a hydraulic module. The hydraulic module provided in the embodiments of the present application may be used for air-source water heaters, and may also be used for home heating equipment such as underfloor heating systems and radiators, which is not specifically limited herein. It should be noted that the hydraulic module is configured to exchange heat between refrigerant in the refrigerant flow passage and water in the water conveyance flow passage, thereby heating or cooling the water, to output the water at a set temperature and convey the water to a water storage device such as a water tank, or to convey the water to a heat release device such as a floor heating pipe or a radiator.

The hydraulic module of the embodiments of the present application includes a casing and the heat exchange device 10 as described above, wherein the casing has an accommodating cavity, and the heat exchange device 10 is arranged in the accommodating cavity. When the temperature detection assembly 200 of the heat exchange device 10 is installed on the heat exchange body 100, the temperature probe 210 can be installed in place in one step, and the depth of the temperature measurement body 211 of the temperature probe 210 inserted into the water conveyance flow passage can be controlled, to improve the installation stability of the temperature measurement body 211, thereby improving the accuracy of the temperature measurement body 211 in detecting the temperature of the fluid in the water conveyance flow passage.

The embodiments of the present application also provide a heat pump system, which includes the hydraulic module as described above. By means of the hydraulic module as described above, the temperature of the water outputted from the heat exchange device 10 can be more accurately controlled.

The same or similar reference numbers in the accompanying drawings of this embodiment correspond to the same or similar components. In the description of the present application, it should be understood that if there are terms such as "up", "down", "left", "right" indicating orientation or positional relationships based on the orientation or positional relationships shown in the accompanying drawings, it is only for the convenience of describing the present application and simplifying the description, and does not indicate or imply that the device or component referred to must have a specific orientation, be constructed and operated in a specific orientation. Therefore, the language used to describe the positional relationships in the accompanying drawings is only for illustrative purposes and cannot be understood as a limitation of this patent. For those ordinarily skilled in the art, the specific meanings of the terms can be understood according to specific situations.

The embodiments set forth above are only illustrated as preferred embodiments of the present application, and are not intended to limit the present application. All modifications, equivalent substitutions and improvements made within the spirit and principles of the present application shall fall within the protection scope of the present application.

## Claims

1. A heat exchange device for a hydraulic module, comprising:
a heat exchange body having a water conveyance flow passage and a temperature measurement hole communicating with the water conveyance flow passage, wherein a wall surface of the heat exchange body defining the temperature measurement hole comprises a positioning surface, and an angle is formed between the positioning surface and an axial direction of the temperature measurement hole; and
a temperature detection assembly comprising a temperature probe, a heat-conductive elastic member and a retainer, wherein the temperature probe includes a temperature measurement body and a positioning portion arranged on the temperature measurement body,
wherein: the temperature measurement body passes through the temperature measurement hole and is inserted into the water conveyance flow passage; the heat-conductive elastic member is arranged between the positioning surface and the positioning portion; and the retainer is fixed to the heat exchange body and abuts against the positioning portion.

2. The heat exchange device according to claim 1, wherein:
an outer surface of the heat exchange body comprises a detector mounting surface, and the temperature measurement hole extends from the detector mounting surface; and
the positioning portion is arranged in the temperature measurement hole, and a surface of the positioning portion away from the positioning surface is flush with the detector mounting surface, and the retainer abuts against the detector mounting surface.

3. The heat exchange device according to claim 2, wherein the heat exchange body comprises:
a heat exchange box having the water conveyance flow passage and an insertion port communicating with the water conveyance flow passage; and
a probe positioning portion having the temperature measurement hole, wherein the probe positioning portion is arranged at the insertion port and protrudes from an outer surface of the heat exchange box, and a surface of the probe positioning portion away from the insertion port forms the detector mounting surface.

4. The heat exchange device according to claim 1, wherein an outer peripheral wall surface of the retainer is provided with a retainer opening penetrating through the retainer along the axial direction of the temperature measurement hole, and the temperature probe passes through the retainer opening and comes into contact with a wall surface of the retainer opening.

5. The heat exchange device according to claim 4, wherein the retainer comprises:
a retainer portion abutting against the positioning portion; and
a retainer mounting portion arranged on one side of the retainer portion and fixed to the heat exchange body.

6. The heat exchange device according to claim 5, wherein:
the retainer mounting portion is provided with a temperature detection threaded hole, which is parallel to the axial direction of the temperature measurement hole; and
the temperature detection assembly further comprises a temperature detection screw, which is arranged in the temperature detection threaded hole to fix the retainer to the heat exchange body.

7. The heat exchange device according to claim 1, wherein:
the water conveyance flow passage comprises a water inlet section and a water outlet section;
the heat exchange body has two temperature measurement holes corresponding respectively to the water inlet section and the water outlet section; and
the heat exchange device has two temperature detection assemblies corresponding respectively to the two temperature measurement holes.

8. The heat exchange device according to claim 7, comprising a water inlet port communicating with the water inlet section and a water outlet port communicating with the water outlet section,
wherein the water inlet port and the water outlet port protrude from a same side of the heat exchange body, and each of the temperature measurement holes is provided at a side away from the water inlet port and the water outlet port.

9. A hydraulic module, comprising:
a casing having an accommodating cavity; and
the heat exchange device according to any one of claims 1 to 8, wherein the heat exchange device is arranged in the accommodating cavity.

10. A heat pump system, comprising the hydraulic module according to claim 9.
